# EUROPEAN PATENT APPLICATION

(11) **EP 2 921 267 A2**
(43) Date of publication of application: **23.09.2015**
(21) Application number: 15150748.0
(22) Date of filing: 12.01.2015
(51) Int. Cl.: B25J 9/16

(54) **Robot system, calibration method in robot system, and position correcting method in robot system**

(30) Priority: 17.03.2014 JP 2014053072
(71) Applicant: Kabushiki Kaisha Yaskawa Denki, Kitakyushu-shi, Fukuoka 806-0004 (JP)
(72) Inventor: Suzumura, Kazuki, Kitakyushu-shi, Fukuoka 806-0004 (JP); Fujii, Toshimichi, Kitakyushu-shi, Fukuoka 806-0004 (JP); Nakamura, Koji, Kitakyushu-shi, Fukuoka 806-0004 (JP)
(74) Representative: Viering, Jentschura & Partner Patent- und Rechtsanwälte

(57) **Abstract**

A robot system includes a robot including a main body and a hand. An imaging device picks up an image of a workpiece held by the hand. Image pick-up control means sends movement information to robot control means to move the workpiece held by the robot to a plurality of positions, controls the imaging device to pick up the image of the workpiece at the plurality of positions, recognizes a registered portion of the workpiece at the plurality of positions, and performs a calibration based on the movement information and based on a result of recognizing the registered portion of the workpiece held by the robot at the plurality of positions. The calibration includes correlating positional information of the image picked up by the imaging device to positional information of the robot.

## Description

### BACKGROUND

### FIELD OF THE INVENTION

The present disclosure relates to a robot system, a calibration method in a robot system, and a position correcting method in a robot system.

### DISCUSSION OF THE BACKGROUND

Japanese Unexamined Patent Application Publication No. 2010-172986 discloses a robot system. The robot system includes a robot, a camera, a robot controller, and a personal computer. The robot includes a multi-articular robot main body and a hand mounted to a distal end of the multi-articular robot main body so as to hold a workpiece. The camera picks up an image of the workpiece held by the hand of the robot. The robot controller controls operations of the robot main body. The personal computer performs three-dimensional measurement and recognition based on the image picked up by the camera. In the robot system, the robot is provided with a calibration checkerboard for the camera to pick up an image of the checkerboard. The image is used for a calibration in which a coordinate system imparted to the robot is correlated to a coordinate system imparted to the camera.

The contents of Japanese Unexamined Patent Application Publication No. 2010-172986 are incorporated herein by reference in their entirety.

The robot system disclosed in Japanese Unexamined Patent Application Publication No. 2010-172986 requires the camera to pick up an image of the calibration checkerboard mounted on the robot so as to use the image for the calibration in which the coordinate system imparted to the robot is correlated to the coordinate system imparted to the camera. The use of the checkerboard leads to an increase in the piece-part count of the robot system.

The present disclosure has been made in view of the above-described circumstances, and it is an object of the present disclosure to provide a robot system, a calibration method in a robot system, and a position correcting method in a robot system that perform a calibration including correlating positional information of an image picked up by the imaging device to positional information of the robot while eliminating or minimizing increase in piece-part count.

### SUMMARY

According to one aspect of the present disclosure, a robot system includes a robot, an imaging device, image pick-up control means, and robot control means. The robot includes a hand and a multi-articular robot main body. The hand is configured to hold a workpiece. To the multi-articular robot main body, the hand is mounted. The imaging device is configured to pick up an image of the workpiece held by the hand. The image pick-up control means is for controlling the imaging device to pick up the image of the workpiece held by the hand. The robot control means is for controlling the robot main body to operate. The image pick-up control means sends movement information to the robot control means so as to control the robot control means to move the workpiece held by the robot to a plurality of positions, controls the imaging device to pick up the image of the workpiece held by the robot at the plurality of positions, recognizes a registered portion of the workpiece held by the robot at the plurality of positions, and performs a calibration based on the movement information and based on a result of recognizing the registered portion of the workpiece held by the robot at the plurality of positions. The calibration includes correlating positional information of the image picked up by the imaging device to positional information of the robot.

In the robot system according to the one aspect of the present disclosure, as described above, the image pick-up control means sends movement information to the robot control means to so as to control the robot control means to move a workpiece to a plurality of positions, controls the imaging device to pick up an image of the workpiece at the plurality of positions, recognizes a registered portion of the workpiece held by the robot at the plurality of positions, performs a calibration based on the movement information and based on a result of recognizing the registered portion of the workpiece held by the robot at the plurality of positions. The calibration includes correlating positional information of the image picked up by the imaging device to positional information of the robot. This eliminates the need for a calibration checkerboard and ensures a calibration using a workpiece to correlate positional information of the image picked up by the imaging device to positional information of the robot. This, in turn, ensures a calibration including correlating positional information of the image picked up by the imaging device to positional information of the robot while eliminating or minimizing increase in piece-part count. In addition, the robot is driven into operation based on movement information sent from the image pick-up control means at the time of the calibration. This enables the image pick-up control means to perform processing associated with the calibration without the robot control means storing a movement state of the robot. This, in turn, eliminates or minimizes complication in the calibration processing.

According to another aspect of the present disclosure, a calibration method in a robot system includes holding a workpiece using a hand mounted to a main body of a multi-articular robot. The workpiece held by the robot is moved to a plurality of positions based on movement information sent from image pick-up control means, and an imaging device is controlled to pick up an image of the workpiece at the plurality of positions. A registered portion of the workpiece held by the robot is recognized at the plurality of positions based on a result of the step of controlling the imaging device to pick up the image of the workpiece at the plurality of positions. A calibration is performed including correlating positional information of the image picked up by the imaging device to positional information of the robot based on the movement information and based on a result of the recognizing step, and the calibration is ended.

In the calibration method in the robot system according to the another aspect of the present disclosure, as described above, a workpiece is moved to a plurality of positions based on movement information sent from image pick-up control means, and the imaging device is controlled to pick up an image of the workpiece held by the robot at the plurality of positions. A registered portion of the workpiece held by the robot is recognized at the plurality of positions based on a result of controlling the imaging device to pick up the image of the workpiece at the plurality of positions. A calibration is performed including correlating positional information of the image picked up by the imaging device to positional information of the robot based on the movement information and based on a result of the recognizing step, and the calibration is ended. This eliminates the need for a calibration checkerboard and ensures a calibration using a workpiece to correlate positional information of the image picked up by the imaging device to positional information of the robot. This, in turn, ensures a calibration method in a robot system in which a calibration is performed including correlating positional information of the image picked up by the imaging device to positional information of the robot while eliminating or minimizing increase in piece-part count. In addition, the robot is driven into operation based on movement information sent from the image pick-up control means at the time of the calibration. This enables the image pick-up control means to perform processing associated with the calibration without the robot storing a movement state of the robot. This eliminates or minimizes complication in the calibration processing.

According to the other aspect of the present disclosure, a position correcting method in a robot system includes holding a workpiece using a hand mounted to a main body of a multi-articular robot. The workpiece held by the robot is moved to a plurality of positions based on movement information sent from image pick-up control means, and an imaging device is controlled to pick up an image of the workpiece at the plurality of positions. A registered portion of the workpiece held by the robot is recognized at the plurality of positions based on a result of the step of controlling the imaging device to pick up the image of the workpiece at the plurality of positions. A calibration is performed including correlating positional information of the image picked up by the imaging device to positional information of the robot based on the movement information and based on a result of the recognizing step. A position and a posture of a targeted workpiece held by the robot are recognized, and the position of the targeted workpiece is corrected based on a result of the calibration.

In the position correcting method in a robot system according to the other aspect of the present disclosure, as described above, a workpiece is moved to a plurality of positions based on movement information sent from image pick-up control means, and the imaging device is controlled to pick up an image of the workpiece held by the robot at the plurality of positions. A registered portion of the workpiece held by the robot is recognized at the plurality of positions based on a result of controlling the imaging device to pick up the image of the workpiece at the plurality of positions. A calibration is performed including correlating positional information of the image picked up by the imaging device to positional information of the robot based on the movement information and based on a result of the recognizing step. This eliminates the need for a calibration checkerboard and ensures a calibration using a workpiece to correlate positional information of the image picked up by the imaging device to positional information of the robot. This, in turn, ensures a position correcting method in a robot system in which a calibration is performed including correlating positional information of the image picked up by the imaging device to positional information of the robot while eliminating or minimizing increase in piece-part count. In addition, the robot is driven into operation based on movement information sent from the image pick-up control means at the time of the calibration. This enables the image pick-up control means to perform processing associated with the calibration without the robot storing a movement state of the robot. This eliminates or minimizes complication in the calibration processing.

The above-described configurations ensure a calibration including correlating positional information of an image picked up by the imaging device and positional information of the robot while eliminating and minimizing increase in piece-part count.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a schematic view of a robot system according to an embodiment, illustrating a general arrangement of the robot system;
FIG. 2 illustrates parallel movement of a workpiece at the time of a calibration in the robot system according to the embodiment;
FIG. 3 illustrates turning of a workpiece at the time of the calibration in the robot system according to the embodiment;
FIG. 4 is a flowchart of workpiece recognition processing performed by the robot system according to the embodiment; and
FIG. 5 is a flowchart of calibration processing performed by the robot system according to the embodiment.

### DESCRIPTION OF THE EMBODIMENTS

The embodiments will now be described with reference to the accompanying drawings, wherein like reference numerals designate corresponding or identical elements throughout the various drawings.

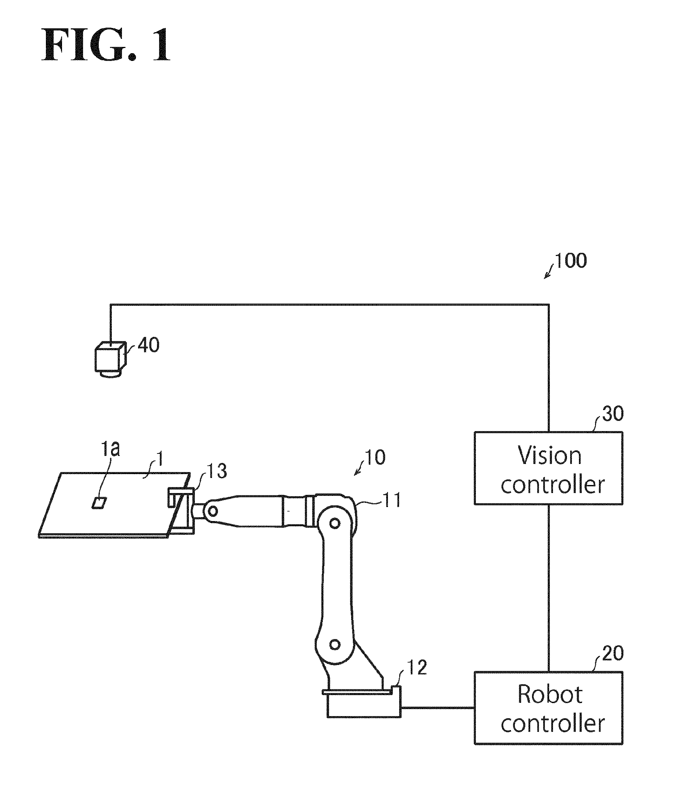

By referring to FIG. 1, a configuration of a robot system 100 according to this embodiment will be described.

As illustrated in FIG. 1, the robot system 100 includes a robot 10, a robot controller 20, a vision controller 30, and an imaging device 40. In the robot system 100, the robot 10 holds a workpiece 1 to perform a predetermined kind of work. The robot 10 includes a vertical multi-articular robot main body 11, a base 12, and a hand 13. The robot main body 11 is mounted to the base 12, and the hand 13 is mounted to the robot main body 11. The robot controller 20 is an example of the "robot control means", and the vision controller 30 is an example of the "image pick-up control means".

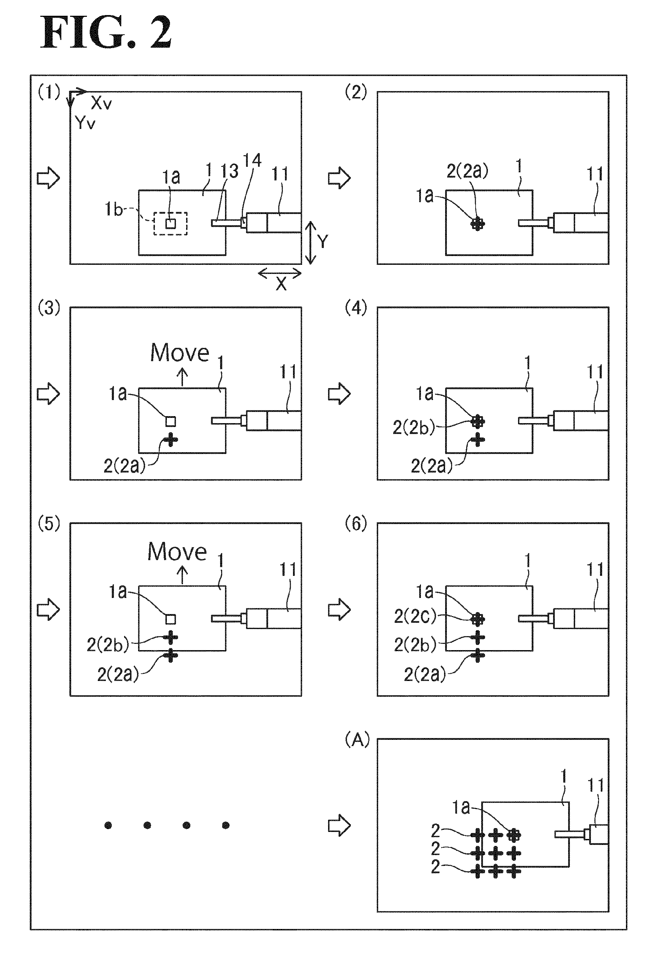

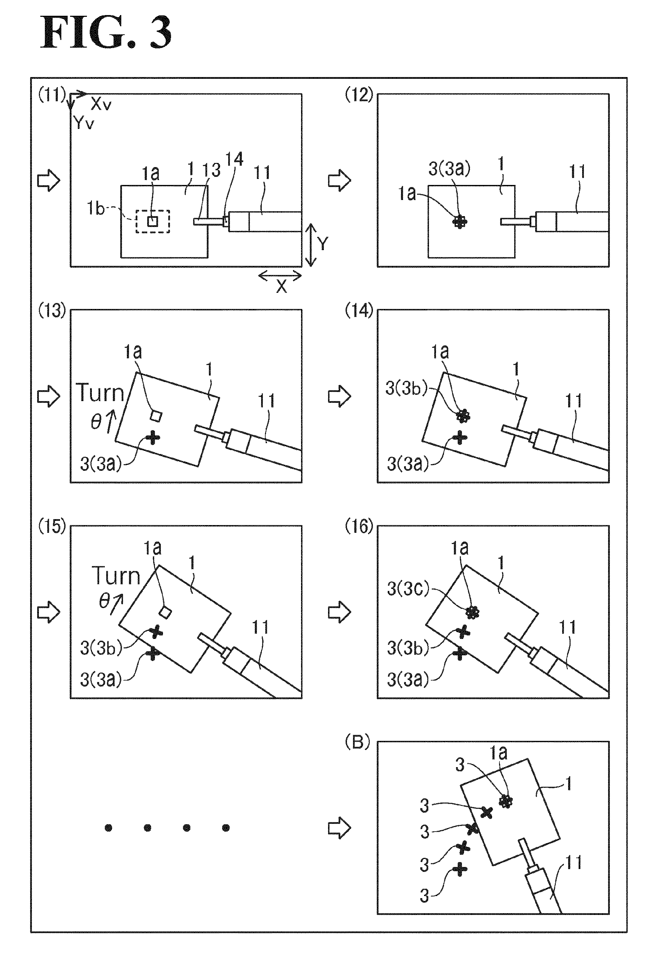

The robot 10 holds the workpiece 1 using the hand 13. As illustrated in FIG. 2, the robot 10 is capable of making a parallel movement of the held workpiece 1 on a horizontal plane. As illustrated in FIG. 3, the robot 10 is capable of turning the held workpiece 1 about a control point 14, which is set in advance. For example, the control point 14 is set at the position on the robot main body 11 where the hand 13 is mounted. The robot main body 11 is a vertical multi-articular robot. The base 12 is secured to a floor, and the robot main body 11 is mounted to the base 12. The robot main body 11 is driven into operation with the movement of the control point 14 controlled relative to the base 12, which is secured to the floor.

As illustrated in FIG. 1, the robot controller 20 is coupled to the robot 10 to control the robot 10 (robot main body 11) to operate. Specifically, the robot controller 20 controls the robot 10 (robot main body 11) based on a program to perform a predetermined operation. The robot controller 20 is coupled to the vision controller 30. From the vision controller 30, the robot controller 20 receives movement information to move the workpiece 1 held by the robot 10. Based on the movement information, the robot controller 20 drives the robot main body 11 into operation.

The vision controller 30 is coupled to the imaging device 40 to control the imaging device 40 to perform an image pick-up operation. Based on a result of the imaging device 40 picking up an image of the workpiece 1, the vision controller 30 recognizes the position of the workpiece 1 and the posture of the workpiece 1. Then, the vision controller 30 sends information of the recognized position and posture of the workpiece 1 to the robot controller 20. Then, the vision controller 30 performs a calibration including correlating positional information of the image picked up by the imaging device 40 to positional information of the robot 10. In order to correct the position of the targeted workpiece 1 based on a result of the calibration and based on the result of the imaging device 40 picking up the image of the targeted workpiece 1, the vision controller 30 sends movement information to the robot controller 20 so as to move the targeted workpiece 1 held by the robot 10.

The imaging device 40 picks up an image of the workpiece 1 held by the hand 13 of the robot 10. The imaging device 40 is fixed over the robot 10. The image picked up by the imaging device 40 has an exemplary coordinate system as illustrated in FIG. 2, with Xv coordinate and Yv coordinate starting from the origin on the upper left corner of the image.

In this embodiment, the vision controller 30 sends the movement information to the robot controller 20 so as to control the robot controller 20 to move the workpiece 1 to a plurality of positions, and controls the imaging device 40 to pick up an image of the workpiece 1 at the plurality of positions. The workpiece 1 has a registered portion 1b, and the vision controller 30 recognizes the registered portion 1b at the plurality of positions. Based on the movement information and based on a result of the vision controller 30 recognizing the registered portion 1b, the vision controller 30 performs the calibration including correlating the positional information of the image picked up by the imaging device 40 to the positional information of the robot 10.

Specifically, as illustrated in FIGs. 2 and 3, the vision controller 30 extracts a characteristic 1a from within the registered portion 1b of the workpiece 1 held by the robot 10, controls the imaging device 40 to pick up an image of the characteristic 1a of the workpiece 1 at the plurality of positions, obtains a movement state of the characteristic 1a of the workpiece 1, and performs the calibration based on the movement state of the characteristic 1a of the workpiece 1 and based on the movement information. The portion 1b of the workpiece 1 is registered in advance by a user and may vary depending on the kind of the workpiece 1. Examples of the registered portion of the workpiece 1 include, but are not limited to, a main portion of the workpiece 1 and a portion of the workpiece 1 with a characteristic shape or a characteristic pattern. Another example of the registered portion of the workpiece 1 is an invariable portion of the workpiece 1 unlike a burr (whose shape may vary from workpiece to workpiece). The vision controller 30 extracts at least one characteristic 1a from among the registered portion 1b of the workpiece 1, and uses the extracted characteristic 1a to recognize the position of the workpiece 1 and the posture of the workpiece 1.

The movement information includes movement distance information. The vision controller 30 sends the movement information including the movement distance information to the robot controller 20 so as to control the robot controller 20 to make a plurality of parallel movements of the workpiece 1 held by the robot 10 to the plurality of positions, controls the imaging device 40 to pick up an image of the workpiece 1 at the plurality of positions, and correlates coordinate information of the image picked up by the imaging device 40 to coordinate information of the robot 10 based on the movement distance information and based on the result of the imaging device 40 picking up the image of the workpiece 1 at the plurality of positions.

Specifically, as illustrated in FIG. 2, the vision controller 30 sends the movement information including the movement distance information to the robot controller 20 so as to control the robot controller 20 to make a plurality of movements of the workpiece 1 held by the robot 10 in a first direction (X direction) on a horizontal plane, and to make a plurality of movements of the workpiece 1 on the horizontal plane in a second direction (Y direction) orthogonal to the first direction. Thus, the vision controller 30 controls the workpiece 1 to make a parallel movement to the plurality of positions in the form of a grid, and controls the imaging device 40 to pick up the image of the workpiece 1 at the plurality of positions. Based on the movement information and the result of the imaging device 40 picking up the image of the workpiece 1 at the plurality of positions, the vision controller 30 correlates the coordinate information of the image of the workpiece 1 picked up by the imaging device 40 to the coordinate information of the robot 10.

Referring to step (1) illustrated in FIG. 2, the workpiece 1 is moved into an image pick-up area (angle of view) of the imaging device 40, and an image of the workpiece 1 held by the robot 10 is picked up. Next, referring to step (2) illustrated in FIG. 2, the characteristic 1a of the workpiece 1 in the image is recognized. Then, a mark 2 (2a) is put on the portion of the image corresponding to the recognized characteristic 1a. Referring to step (3) illustrated in FIG. 2, the workpiece 1 is parallelly moved in the Y direction based on the movement information sent from the vision controller 30. Referring to step (4) illustrated in FIG. 2, the characteristic 1a of the moved workpiece 1 in the image is recognized. Then, a mark 2 (2b) is put on the portion of the image corresponding to the recognized characteristic 1a of the moved workpiece 1.

Then, referring to step (5) illustrated in FIG. 2, the workpiece 1 is parallelly moved further in the Y direction based on the movement information sent from the vision controller 30. Referring to step (6) illustrated in FIG. 2, the characteristic 1a of the moved workpiece 1 in the image is recognized. Then, a mark 2 (2c) is put on the portion of the image corresponding to the recognized characteristic 1a of the moved workpiece 1. Then, the workpiece 1 is moved a plurality of times in the X direction and in the Y direction and provided with a plurality of marks 2 through a plurality of times of image pick-up and recognition. As a result, the marks 2 are recorded in the form of a grid as in step (A) illustrated in FIG. 2. Based on coordinate positions of the plurality of marks 2 and the movement information used to move the workpiece 1, a calibration is performed to correlate the coordinate information of the image picked up by the imaging device 40 to the coordinate information of the robot 10.

The movement information includes turning information. As illustrated in FIG. 3, the vision controller 30 sends the movement information including the turning information to the robot controller 20 so as to control the robot controller 20 to make, in addition to the plurality of parallel movements of the workpiece 1, a plurality of turns of the workpiece 1 to a plurality of turning positions, controls the imaging device 40 to pick up an image of the workpiece 1 at the plurality of turning positions. Then, based on the turning information and based on the result of the imaging device 40 picking up the image of the workpiece 1 at the plurality of turning positions, the vision controller 30 correlates an in-image turning center of the image picked up by the imaging device 40 to a turning center about which the robot 10 turns the workpiece 1.

Referring to step (11) illustrated in FIG. 3, the workpiece 1 is moved into the image pick-up area (angle of view) of the imaging device 40, and an image of the workpiece 1 held by the robot 10 is picked up. Next, referring to step (12) illustrated in FIG. 3, the characteristic 1a of the workpiece 1 in the image is recognized. Then, a mark 3 (3a) is put on the portion of the image corresponding to the recognized characteristic 1a. Referring to step (13) illustrated in FIG. 3, the workpiece 1 is turned clockwise by an angle *θ* about the control point 14 based on the movement information including the turning information sent from the vision controller 30. Referring to step (14) illustrated in FIG. 3, the characteristic 1a of the moved workpiece 1 in the image is recognized. Then, a mark 3 (3b) is put on the portion of the image corresponding to the recognized characteristic 1a of the moved workpiece 1.

Referring to step (15) illustrated in FIG. 3, the workpiece 1 is turned further clockwise by the angle *θ* about the control point 14 based on the turning information sent from the vision controller 30. Referring to step (16) illustrated in FIG. 3, the characteristic 1a of the moved workpiece 1 in the image is recognized. Then, a mark 3 (3c) is put on the portion of the image corresponding to the recognized characteristic 1a of the moved workpiece 1. Then, the workpiece 1 is turned a plurality of times, and as in step (B) illustrated in FIG. 3, is provided with a plurality of marks 3 through a plurality of times of image pick-up and recognition. Based on coordinate positions of the plurality of marks 3 and the turning information used to turn the workpiece 1, a calibration is performed to correlate the in-image turning center of the image picked up by the imaging device 40 to the turning center about which the robot 10 turns the workpiece 1.

The vision controller 30 sends the movement information including the turning information to the robot controller 20 so as to control the robot controller 20 to make a plurality of turns of the workpiece 1 to a plurality of turning positions, controls the imaging device 40 to pick up an image of the workpiece 1 at the plurality of turning positions, repeats a calculation to obtain the in-image turning center of the image picked up by the imaging device 40 based on the result of the imaging device 40 picking up the image of the workpiece 1 at the plurality of turning positions, and correlates the positional information of the image picked up by the imaging device 40 to the positional information of the robot 10 based on the movement information and based on the in-image turning center.

The portion 1b of the workpiece 1 may be registered during the calibration. The vision controller 30 uses the portion 1b of the workpiece 1 registered during the calibration to recognize the position and the posture of the targeted workpiece 1 held by the robot 10, and corrects the position of the targeted workpiece 1 based on the result of the calibration. Specifically, when the kind of the targeted workpiece 1 is identical to the kind of the previous workpiece 1 used in the calibration, the vision controller 30 uses the portion 1b of the previous workpiece 1 registered during the calibration to recognize the targeted workpiece 1; it is not necessary to register the targeted workpiece 1 for recognition purposes.

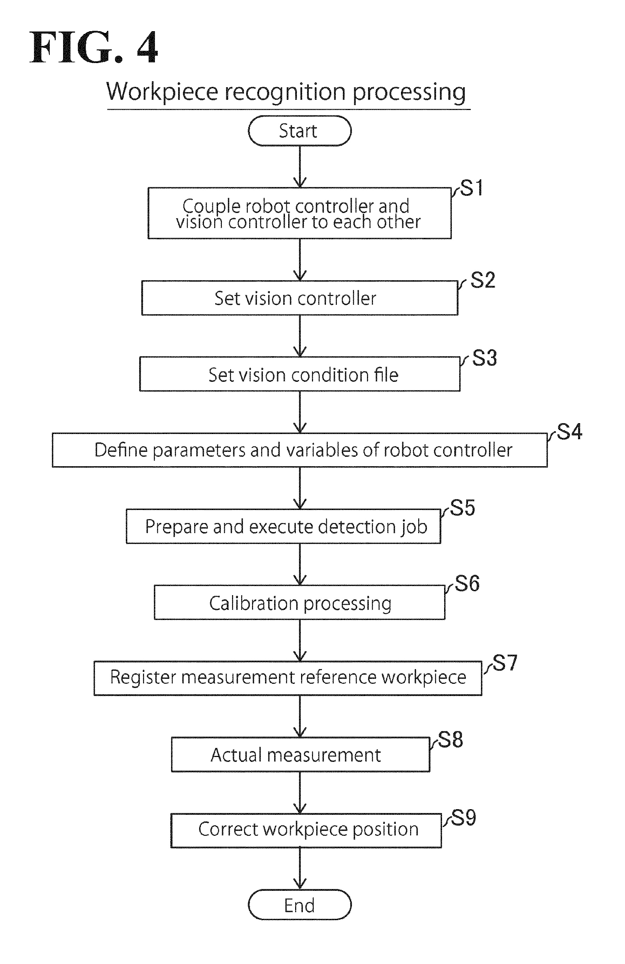

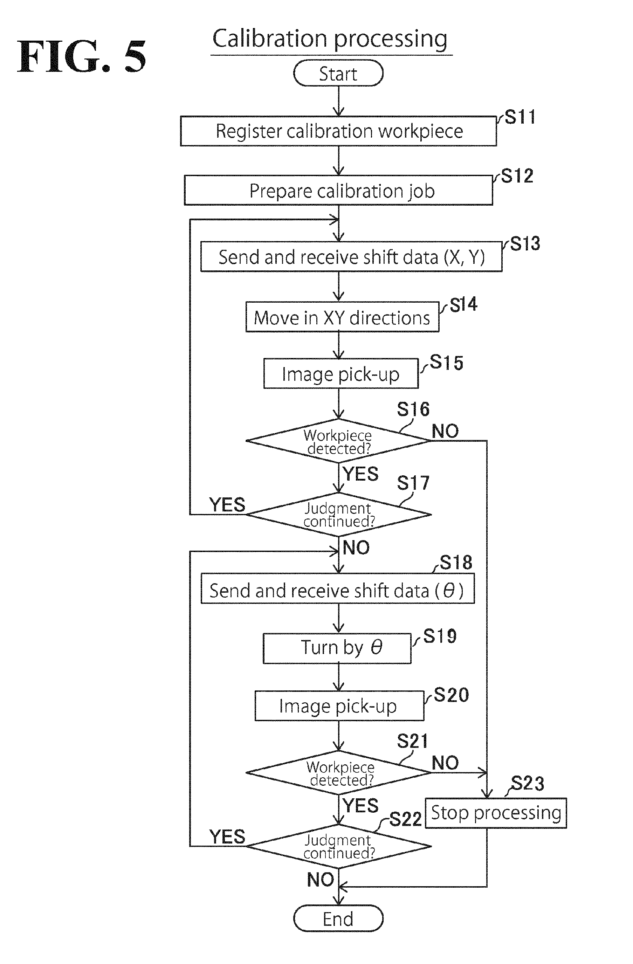

Next, by referring to FIGs. 4 and 5, workpiece recognition processing performed by the robot system 100 according to this embodiment will be described.

At step S1 illustrated in FIG. 4, the robot controller 20 and the vision controller 30 are coupled to each other. At step S2, the vision controller 30 is set. Specifically, the vision controller 30 is set to establish communication between the robot controller 20 and the vision controller 30. At step S3, a vision condition file is set. Specifically, such a file is specified that stores a vision condition (calibration result) under which the position of the workpiece 1 and the posture of the workpiece 1 are recognized. The vision condition is stored in the robot controller 20.

At step S4, the robot controller 20 is provided with definitions of parameters and variables. Specifically, the parameters and variables that are defined include driving information for driving the robot 10 into operation. At step S5, a detection job is prepared and executed for the robot controller 20. This establishes communication between the robot controller 20 and the vision controller 30, and ensures that the robot 10 is controlled based on a result of image processing by the vision controller 30.

At step S6, calibration processing is performed. This correlates the positional information of the image picked up by the imaging device 40 to the positional information of the robot 10. At step S7, a measurement reference workpiece is registered. Specifically, a reference position of the workpiece 1 for work on the workpiece 1 is registered. At step S8, a targeted workpiece 1 is measured (imaged and recognized). Then, at step S9, the targeted workpiece 1 is corrected (moved) to the position registered in the reference workpiece registration.

Then, when the workpiece 1 registered in the reference workpiece registration is subjected to additional work, the processings at step S8 and step S9 are repeated. When a workpiece 1 unregistered in the reference workpiece registration is subjected to work, the procedure returns to the measurement reference workpiece registration processing at step S7. When the positional relationship between the robot 10 and the imaging device 40 is changed, the procedure returns to the calibration processing at step S6. After a predetermined number of workpieces 1 have been subjected to work, the workpiece recognition processing ends.

Next, by referring to FIG. 5, calibration processing at step S6 illustrated in FIG. 4 will be described in detail.

At step S11 illustrated in FIG. 5, a calibration workpiece is registered. Specifically, the vision controller 30 registers the portion 1b (see FIGs. 2 and 3), which is used to recognize the workpiece 1 subjected to calibration. At step S12, the robot controller 20 prepares a calibration job to perform a calibration. Specifically, the robot controller 20 prepares a calibration job to drive the robot 10 into operation based on the movement information of the vision controller 30.

At step S 13, the vision controller 30 sends shift data (X, Y) (movement information) to the robot controller 20. At step S14, based on the shift data (X, Y) (movement information), the robot controller 20 drives the robot main body 11 into operation to make a parallel movement of the workpiece 1 in the XY directions. At step S15, the imaging device 40 picks up an image of the workpiece 1.

At step S16, a determination is made as to whether the workpiece 1 has been detected (the characteristic 1a of the workpiece 1 has been recognized). When the workpiece 1 has been detected, the procedure proceeds to step S 17. When the workpiece 1 has not been detected, the procedure proceeds to step S23. At step S17, a deteimination is made as to whether to continue a judgment (image pick-up processing and recognition processing). Specifically, a determination is made as to whether the judgment (image pick-up processing and recognition processing) has been performed a predetermined number of times. When a determination is made to continue the judgment, the procedure returns to step S13. When a determination is made to end the judgment, the procedure proceeds to step S18. In this manner, the vision controller 30 correlates the direction and movement distance (measurement) of the image picked up by the imaging device 40 to the movement direction and movement distance of the robot 10.

At step S18, the vision controller 30 sends the shift data (*θ*) (movement information) to the robot controller 20. At step S19, based on the shift data (*θ*) (movement information), the robot controller 20 drives the robot main body 11 into operation to turn the workpiece 1 by an angle *θ*. At step S20, the imaging device 40 picks up an image of the workpiece 1.

At step S21, a determination is made as to whether the workpiece 1 has been detected (the characteristic 1a of the workpiece 1 has been recognized). When the workpiece 1 has been detected, the procedure proceeds to step S22. When the workpiece 1 has not been detected, the procedure proceeds to step S23. At step S22, a determination is made as to whether to continue the judgment (image pick-up processing and recognition processing). Specifically, a determination is made as to whether the judgment (image pick-up processing and recognition processing) has been performed a predetermined number of times. Also, a determination is made as to whether to repeat the image pick-up processing and the calculation processing to cause the in-image turning center obtained by calculation using the picked-up image of the workpiece 1 to converge within a particular range. When a determination is made to continue the judgment, the procedure returns to step S18. When a determination is made to end the judgment, the result of the calibration is registered and the calibration processing ends. In this manner, the vision controller 30 correlates the in-image turning center of the image picked up by the imaging device 40 to the turning center about which the robot 10 turns the workpiece 1.

When at step S16 or S21 the workpiece 1 is not detected, an error is notified at step S23 and the calibration processing is stopped.

This embodiment provides the following advantageous effects.

In this embodiment, the vision controller 30 sends the movement information to the robot controller 20 so as to control the robot controller 20 to move the workpiece 1 to a plurality of positions, controls the imaging device 40 to pick up an image of the workpiece 1 at the plurality of positions, recognizes the registered portion 1b of the workpiece 1 held by the robot 10 at the plurality of positions, and performs a calibration including correlating the positional information of the image picked up by the imaging device 40 to the positional information of the robot 10 based on the movement information and based on a result of recognizing the registered portion 1b of the workpiece 1 held by the robot 10 at the plurality of positions. This eliminates the need for a calibration checkerboard and ensures a calibration using the workpiece 1 to correlate the positional information of the image picked up by the imaging device 40 to the positional information of the robot 10. This, in turn, ensures a calibration including correlating the positional information of the image picked up by the imaging device 40 to the positional information of the robot 10 while eliminating or minimizing increase in piece-part count. In addition, the robot 10 is driven into operation based on the movement information sent from the vision controller 30 at the time of the calibration. This ensures that the vision controller 30 performs the calibration processing without the need for the robot controller 20 to store the movement state of the robot 10. This eliminates or minimizes complication in the calibration processing.

Also in this embodiment, the vision controller 30 uses the portion 1b of the previous workpiece 1 registered during the calibration to recognize the position and the posture of the targeted workpiece 1 held by the robot 10, and correlates the position of the targeted workpiece 1 based on the result of the calibration. Thus, when the kind of the targeted workpiece 1 is identical to the kind of the previous workpiece 1 registered in the calibration, it is not necessary to register the targeted workpiece 1 for recognition purposes. This reduces the labor and processing load involved in the recognition of the position of the workpiece 1 and the posture of the workpiece 1.

Also in this embodiment, the vision controller 30 extracts the characteristic 1a from within the registered portion 1b of the workpiece 1 held by the robot 10, controls the imaging device 40 to pick up an image of the characteristic 1a of the workpiece 1 at a plurality of positions to which the held workpiece 1 is moved, obtains the movement state of the characteristic 1a of the workpiece 1, and performs a calibration based on the movement information and based on the movement state of the characteristic 1a of the workpiece 1. This ensures that the vision controller 30 automatically extracts a characteristic 1a readily recognizable for the vision controller 30 from within the registered portion 1b of the workpiece 1, and uses the extracted characteristic 1a to perform the calibration. This, in turn, ensures a more accurate calibration.

Also in this embodiment, the movement information includes movement distance information. The vision controller 30 sends the movement information including the movement distance information to the robot controller 20 so as to control the robot controller 20 to make a plurality of parallel movements of the workpiece 1 held by the robot 10 to a plurality of positions, controls the imaging device 40 to pick up an image of the workpiece 1 at the plurality of positions, and correlates the coordinate information of the image picked up by the imaging device 40 to the coordinate information of the robot 10 based on the movement distance information and based on the result of the imaging device 40 picking up the image of the workpiece 1 at the plurality of positions. This facilitates correlating the coordinate information of the image picked up by the imaging device 40 to the coordinate information of the robot 10 based on the actual movement of the workpiece 1 caused by the movement distance information and based on the movement of the workpiece 1 in the image picked up by the imaging device 40.

Also in this embodiment, the vision controller 30 sends the movement information to the robot controller 20 so as to control the robot controller 20 to make a plurality of parallel movements of the workpiece 1 held by the robot 10 to a plurality of positions in the form of a grid on a horizontal plane in the first direction (X direction) and the second direction (Y direction) orthogonal to the first direction on the horizontal plane, controls the imaging device 40 to pick up an image of the workpiece 1 at the plurality of positions, and correlates the coordinate information of the image picked up by the imaging device 40 to the coordinate information of the robot 10 based on the movement information and based on the result of the imaging device 40 picking up the image of the workpiece 1 at the plurality of positions. Thus, the calibration is based on a result of picking up an image of the workpiece 1 at a plurality of positions that form a grid resulting from two-dimensional movement of the workpiece 1 on a horizontal plane, and based on the actual movement of the workpiece 1 caused by the movement information. This ensures a more accurate calibration than a calibration in which the workpiece 1 is moved linearly (one-dimensionally).

Also in this embodiment, the movement information includes turning information, and the vision controller 30 sends the movement information including the turning information to the robot controller 20 so as to control the robot controller 20 to make, in addition to the plurality of parallel movements of the workpiece 1, a plurality of turns of the workpiece 1 held by the robot 10 to a plurality of turning positions, controls the imaging device 40 to pick up an image of the workpiece 1 at the plurality of turning positions. Then, based on the turning information and based on the result of the imaging device 40 picking up the image of the workpiece 1 at the plurality of turning positions, the vision controller 30 correlates the in-image turning center of the image picked up by the imaging device 40 to the turning center about which the robot 10 turns the workpiece 1. This facilitates correlating the in-image turning center of the image picked up by the imaging device 40 to the turning center about which the robot 10 turns the workpiece 1 based on the actual movement (turning) of the workpiece 1 caused by the turning information and based on the movement (turning) of the workpiece 1 in the image picked up by the imaging device 40.

Also in this embodiment, the vision controller 30 sends the movement information to the robot controller 20 so as to control the robot controller 20 to make a plurality of turns of the workpiece 1 to a plurality of turning positions, controls the imaging device 40 to pick up an image of the workpiece 1 at the plurality of turning positions, repeats a calculation to obtain the in-image turning center of the image picked up by the imaging device 40 based on the result of the imaging device 40 picking up the image of the workpiece 1 held by the robot 10 at the plurality of positions, and correlates the positional information of the image picked up by the imaging device 40 to the positional information of the robot 10 based on the movement information and based on the in-image turning center. By repeating the image pick-up operation and the calculating operation until the in-image turning center obtained by picking up the image of the workpiece 1 at the plurality of turning positions converges within a particular range, the in-image turning center is calculated accurately. This ensures improved accuracy in correlating the in-image turning center of the image picked up by the imaging device 40 to the turning center about which the robot 10 turns the workpiece 1.

Obviously, numerous modifications and variations of the present disclosure are possible in light of the above teachings. It is therefore to be understood that within the scope of the appended claims, the present disclosure may be practiced otherwise than as specifically described herein.

While in the above-described embodiment the imaging device has been described as recognizing a position on a plane (two-dimensional position), the imaging device may include a three-dimensional camera to recognize a three-dimensional position.

While in the above-described embodiment the workpiece has been described as being moved in the form of a grid on a horizontal plane in the calibration, the workpiece may be moved in the form of a three-dimensional grid (rectangular parallelepiped grid) in the calibration.

While in the above-described embodiment the vision controller (imaging device control means) and the robot controller (robot control means) are separate from each other, the imaging device control means and the robot control means may be integral with each other in a single controller.

While in the above-described embodiment the imaging device has been described as fixed, the imaging device may be movable. In this case, the calibration may be performed every time the imaging device makes a movement, or it is possible to use a movement state of the imaging device to perform a correction in the calibration.

In the above-described embodiment, for the sake of description, the control processing performed by the control means has been described using a flow-driven flowchart, in which the control processing proceeds in order according to a processing flow. This, however, should not be construed in a limiting sense. The control processing performed by the control means may be event-driven processing, in which the control processing is performed on an event basis. In this case, the control processing may be complete event-driven processing or may be a combination of event-driven processing and flow-driven processing.
- 1: Workpiece
- 10: Robot
- 11: Robot main body
- 13: Hand
- 20: Robot controller (robot control means)
- 30: Vision controller (image pick-up control means)
- 40: Imaging device
- 100: Robot system

## Claims

1. A robot system (100), **characterized by**:
a robot (10) comprising:
a hand (13) configured to hold a workpiece; and
a multi-articular robot main body (11) to which the hand (13) is mounted;
an imaging device (40) configured to pick up an image of the workpiece held by the hand (13);
image pick-up control means (30) for controlling the imaging device (40) to pick up the image of the workpiece held by the hand (13); and
robot control means (20) for controlling the robot main body (11) to operate,
wherein the image pick-up control means sends movement information to the robot control means (20) so as to control the robot control means (20) to move the workpiece held by the robot (10) to a plurality of positions, controls the imaging device (40) to pick up the image of the workpiece held by the robot (10) at the plurality of positions, recognizes a registered portion of the workpiece held by the robot (10) at the plurality of positions, and performs a calibration based on the movement information and based on a result of recognizing the registered portion of the workpiece held by the robot (10) at the plurality of positions, the calibration comprising correlating positional information of the image picked up by the imaging device (40) to positional information of the robot (10).

2. The robot system (100) according to claim 1,
wherein the registered portion of the workpiece is registered during the calibration, and
wherein the image pick-up control means (30) uses the registered portion of the workpiece to recognize a position and a posture of a targeted workpiece held by the robot (10), and corrects the position of the targeted workpiece based on a result of the calibration.

3. The robot system (100) according to claim 1 or 2, wherein the image pick-up control means (30) extracts a characteristic from within the registered portion of the workpiece held by the robot (10), controls the imaging device (40) to pick up an image of the characteristic of the workpiece at the plurality of positions to obtain a movement state of the characteristic of the workpiece, and performs the calibration based on the movement information and based on the movement state of the characteristic of the workpiece.

4. The robot system (100) according to any one of claims 1 to 3,
wherein the movement information comprises movement distance information, and
wherein the image pick-up control means (30) sends the movement information comprising the movement distance information to the robot control means (20) so as to control the robot control means (20) to make a plurality of parallel movements of the workpiece held by the robot (10) to the plurality of positions, controls the imaging device (40) to pick up the image of the workpiece held by the robot (10) at the plurality of positions, and correlates coordinate information of the image picked up by the imagine device (40) to coordinate information of the robot (10) based on the movement distance information and based on the result of the imaging device (40) picking up the image of the workpiece held by the robot (10) at the plurality of positions.

5. The robot system (100) according to claim 4, wherein the image pick-up control means (30) sends the movement information to the robot control means (20) so as to control the robot control means (20) to make the plurality of parallel movements of the workpiece to the plurality of positions in a form of a grid on a horizontal plane in a first direction and a second direction orthogonal to the first direction, controls the imaging device (40) to pick up the image of the workpiece at the plurality of positions, and correlates the coordinate information of the image picked up by the imaging device (40) to the coordinate information of the robot (10) based on the movement information and based on the result of the imaging device (40) picking up the image of the workpiece held by the robot (10) at the plurality of positions.

6. The robot system (100) according to claim 4 or 5,
wherein the movement information comprises turning information, and
wherein the image pick-up control means (30) sends the movement information comprising the turning information to the robot control means (20) so as to control the robot control means (20) to make, in addition to the plurality of parallel movements of the workpiece, a plurality of turns of the workpiece held by the robot (10) to a plurality of turning positions, controls the imaging device (40) to pick up the image of the workpiece at the plurality of turning positions, and correlates an in-image turning center of the image picked up by the imaging device (40) to a turning center about which the robot (10) turns the workpiece based on the turning information and based on the result of the imaging device (40) picking up the image of the workpiece held by the robot (10) at the plurality of turning positions.

7. The robot system (100) according to claim 6, wherein the image pick-up control means (30) sends the movement information to the robot control means (20) so as to control the robot control means (20) to make the plurality of turns of the workpiece held by the robot (10) to the plurality of turning positions, controls the imaging device (40) to pick up the image of the workpiece at the plurality of turning positions, repeats a calculation to obtain the in-image turning center of the image picked up by the imaging device (40) based on the result of the imaging device (40) picking up the image of the workpiece held by the robot (10) at the plurality of turning positions, and correlates the positional information of the image picked up by the imaging device (40) to the positional information of the robot (10) based on the movement information and based on the in-image turning center.

8. A calibration method in a robot system (100), **characterized by**:
holding a workpiece using a hand (13) mounted to a main body (11) of a multi-articular robot (10);
moving the workpiece held by the robot (10) to a plurality of positions based on movement information sent from image pick-up control means (30) and controlling an imaging device (40) to pick up an image of the workpiece at the plurality of positions;
recognizing a registered portion of the workpiece held by the robot (10) at the plurality of positions based on a result of the step of controlling the imaging device (40) to pick up the image of the workpiece at the plurality of positions; and
performing a calibration comprising correlating positional information of the image picked up by the imaging device (40) to positional information of the robot (10) based on the movement information and based on a result of the recognizing step, and ending the calibration.

9. A position correcting method in a robot system (100), **characterized by**:
holding a workpiece using a hand (13) mounted to a main body (11) of a multi-articular robot (10);
moving the workpiece held by the robot (10) to a plurality of positions based on movement information sent from image pick-up control means (30) and controlling an imaging device (40) to pick up an image of the workpiece at the plurality of positions;
recognizing a registered portion of the workpiece held by the robot (10) at the plurality of positions based on a result of the step of controlling the imaging device (40) to pick up the image of the workpiece at the plurality of positions;
performing a calibration comprising correlating positional information of the image picked up by the imaging device (40) to positional information of the robot (10) based on the movement information and based on a result of the recognizing step; and
recognizing a position and a posture of a targeted workpiece held by the robot (10) and correcting the position of the targeted workpiece based on a result of the calibration.
